(19) Europäisches Patentamt / European Patent Office / Office européen des brevets

(11) **EP 4 421 110 A1**

(12) **EUROPEAN PATENT APPLICATION**

(43) Date of publication:
28.08.2024   Bulletin 2024/35

(21) Application number: 23158057.2

(22) Date of filing: 22.02.2023

(51) International Patent Classification (IPC):
*C08G 73/02* (2006.01)   *C01B 32/15* (2017.01)
*C08K 3/36* (2006.01)   *B01J 20/20* (2006.01)
*B82Y 30/00* (2011.01)   *H01M 4/96* (2006.01)

(52) Cooperative Patent Classification (CPC):
(C-Sets available)
**C08G 73/0266; C01B 32/05; H01M 4/96;**
B82Y 30/00; C01P 2004/60; C01P 2006/12;
C01P 2006/14; C01P 2006/16        (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Albert-Ludwigs-Universität Freiburg**
**79098 Freiburg (DE)**

(72) Inventors:
• **Fischer, Anna**
**79117 Freiburg (DE)**
• **Berestok, Taisiia**
**4056 Basel (CH)**

• **Ortlieb, Niklas**
**79108 Freiburg (DE)**
• **Küspert, Sven**
**79104 Freiburg (DE)**
• **Martin, Julian**
**79104 Freiburg (DE)**
• **Mutscher, Jonas**
**70806 Kornwestheim (DE)**
• **Grammel, Hannes**
**79108 Freiburg (DE)**

(74) Representative: **noventive**
**Patentanwaltsgesellschaft mbH**
**Riesstraße 16**
**80992 München (DE)**

(54) **COMPOSITE POLYMER PARTICLES, POROUS CARBON PARTICLES AND METHOD FOR INDEPENDENT CONTROL OF PARTICLE DIAMETER AND PORE SIZE OF POROUS CARBON PARTICLES**

(57)    The present invention relates to composite polymer particles and thereof derived porous carbon particles with tailored inter- and intraparticle properties. Furthermore, the present invention describes a hard-templating method involving polymerization and self-assembly of a monomer/oligomer/polymer around inorganic template particles for independently controlling the composite polymer particle size for a given template particle size and thereby the pore size and particle size of porous carbon nanoparticles. As a result, particle sizes of porous carbon particles can be generated independently of pore sizes via hard-templating processes.

Fig. 2

**(Cont. next page)**

(52) Cooperative Patent Classification (CPC): (Cont.)

C-Sets
C08K 3/36, C08L 79/02

**Description**

The present invention relates to composite polymer particles and thereof derived porous carbon particles with tailored inter- and intraparticle properties. Furthermore, the present invention describes a hard-templating method involving polymerization and self-assembly of a monomer/oligomer/polymer around inorganic template particles for independently controlling the composite polymer particle size for a given template particle size and thereby the pore size and particle size of porous carbon nanoparticles. As a result, particle sizes of porous carbon particles can be generated independently of pore sizes via hard-templating processes.

Background

Mesoporous carbons enable due to their large specific surface area, good conductivity, and chemical stability broad applications in various fields such as catalysis, sensing, energy conversion and storage, but also purification and drug delivery. Controlled particle morphology (shape and size) and well-defined architecture within the particles with suitable pore channels containing accessible and interconnected micropores, mesopores and, where appropriate, macropores evenly distributed throughout the volume of the carbon particles are required to ensure a large specific surface area and complete accessibility of the entire volume of the material to any substance (e.g., electrolyte media, adsorbates, analytes, molecules/ions involved in the reaction).

The rational design of electrode active materials plays an important role in improving the electrochemical properties of both, energy storage and conversion devices. For most applications, not only well-defined porous structures but also control over morphology and particle size is desired.

Based on the structure of functional electrodes, it can be shown that not only a porous architecture within the particle volume, but also a well-defined architecture between the particles (in the electrode volume) significantly affects the function. The porous structure between the particles is controlled by the morphological properties of the powder material, e.g., shape, size, and homogeneity of the sample, and determines the packing of the nanoparticles. Polydisperse nanoparticles affect coating reproducibility on the one hand, but also lead to higher tortuosity, inhomogeneous pore distribution and denser packing, resulting in an inaccessible "dead" electrode volume and hindering percolation/penetration of the electrolyte, thus limiting mass transfer. If commercial applications are targeted, high current densities are required which demand for high loading and thick electrodes with effective percolation. This underscores the need for 3D structural engineering that controls nanoparticle properties within the particle (e.g., the intraparticle properties, such as pore size, pore connectivity, surface area, pore volume, surface functionality, graphitization, and conductivity) as well as interparticle properties within an electrode build from it (e.g., percolation, 3D bulk porosity, etc.). However, simultaneous and independent control of all nanoparticle properties is far from trivial and has not been reported so far.

Similarly, control of all the previously mentioned intraparticle and interparticle properties along with a low particle size polydispersity is a huge advantage for applications in the field of adsorption, separation, catalysis, drug delivery, and so on, as it allows to ensure homogeneous and controlled physicochemical properties over the entire porous carbon powder sample and all its 3D processed derivatives.

Current nanocasting strategies, including soft- and hard-templating, represent the main approach to synthesize mesoporous carbon nanoparticles. In this context, a selected carbon precursor (e.g., a polymerizable carbon source or polymer) and a nanometer-sized template with suitable properties self-assemble to form (ordered or disordered) composites (also called hybrids) that, after carbonization (calcination under inert atmosphere) and removal of the template material, yield (meso)porous carbon materials in which the ()pores reflect the size geometry, and possibly surface structure of the template material used.

In soft-template approaches, structure-directing agents, such as surfactant molecules/copolymers that serve as templates are self-assembled into micelles which interact with the material matrix to be structured. The porous structure is formed by removing the micelles through washing steps and/or heat treatment. The pore structure is controlled by the size, chemical composition, thermal properties and concentration of the copolymer/surfactant molecule used. However, controlling the pore size is rather difficult and can only be adjusted within a limited range (< 30 nm), since the process relies on the formation of micelles and is usually based on heat treatment/calcination, which can lead to pore closure, considering the low thermal stability of the copolymer. At the same time, soft-templating generally requires the use of expensive surfactants and block copolymers, which is unfavorable for large-scale production.

The hard-templating approach is based on polymerization or thermal condensation of a carbon precursor around a thermally stable inorganic template followed by carbonization. The porous structure is formed by removing the template, which is usually done by etching. The pore size and shape usually correspond to the properties of the template. Therefore, the use of a predefined template with specific structural characteristics allows the pore structure to be tailored over a wide range (from microporous over mesoporous to macroporous). Moreover, the surface composition and heteroatom doping can be adjusted when using different carbon sources. Due to the variety of templates and their good thermal stability, hard templating has proven to be a reliable approach with excellent reproducibility and scalability, facilitating control over porous structures.

One synthesis strategy already known is the synthesis of colloidal polyaniline-silica composite nanoparticles, which can be converted to porous carbon nanoparticles in further steps. In this context, for example, various reports have been published:

Gill et al. (Langmuir 1992, 8, 2178-2182) report colloidal polyaniline-silica composites at a size scale of about 300 nm. The impact of synthesis parameters on particle diameters is not disclosed.

Feng et al. (Journal of Applied Polymer Science, 2006, Vol. 101, 2088-2094 report colloidal composites of polyaniline and porous silica at a constant ratio of initiator to aniline (1:1) and constant particle diameters.

Roosz et al. (Journal of Colloid and Interface Science, 2017, 502, 184-192) report on polyaniline-silica composites for the generation of "raspberry" or "core-shell" structures. Among other things, the initiator-to-aniline ratio was also varied between 1.0 and 1.5, but no effects on particle sizes and dispersity were described.

Fischer et al. (Carbon 2019, 146, 44) describe mesoporous N-doped carbon nanospheres (MPNC) which were synthesized via an oxidative polymerization of aniline in the presence of silica nanoparticles as a hard template. While the pore size of the MPNCs were varied, tailoring of particle diameters has not been addressed.

However, despite successful implementation of the hard-templating approach, the simultaneous control of primary particle properties within particles (e.g. pore sizes, chemical and surface composition, degree of graphitization, (nano)particle sizes and dispersity) and interparticle properties (e.g. resulting from (nano)particle sizes and dispersity) required for successful material processing into derivative structures and functional optimization in practical applications has not yet been achieved. Moreover, for such tailored materials to find their way into commercial application, their synthesis should have a good level of reproducibility and scalability, while being sustainable, inert and non-toxic.

In summary, no hard-template polymerization approaches have been described to date in which the composite polymer particle diameter (with a controlled dispersity) can be adjusted independently of the inorganic template size.

Object of the invention

It is therefore an object of the present invention to provide an approach for the synthesis of porous carbon (nano)particles which allows simultaneous control of primary particle properties within particles (e.g. pore sizes, chemical and surface composition, degree of graphitization) and interparticle properties (e.g. (nano)particle sizes and dispersity). Particularly it should be possible to tailor the particle diameter of the porous carbon particles via a hard-templated approach independently of the template size used.

It is a further object of the invention to control the particle-diameter dispersity of porous carbon particles.

It is a further object of the present invention to provide porous carbon particles with predefined properties regarding pore size, particle diameter, specific surface areas and pore volume, composition and degree of graphitization.

It is a further object of the present invention to provide a process for large scale implementation without significantly affecting or changing the quality of the porous carbon particles.

Surprisingly, it was found that the problems underlying the invention are solved by composite polymer particles according to claim 1 in which the particle diameter and particle-diameter dispersity can be adjusted independently of each other as well as well as independently of the particle diameter of the template size. Further embodiments of the invention are outlined in dependent claims and throughout the description.

A second object of the invention are porous carbon particle obtained from the composite polymer particles according to the invention.

A third object of the invention is a method for controlling the particle diameter of composite polymer particles independently from the template size.

A fourth object of the invention is also a method for independently controlling the pore size and particle size of porous carbon particles.

A fifth object of the invention is also an article of manufacture comprising the composite polymer particles and/or the porous carbon particles according to the invention or manufactured according to the method of the invention.

A sixth object of the invention is the use of the molar ratio of an initiator to a polymerizable carbon source in a hard-templating approach to control the particle diameter and particle diameter dispersity Đ of composite polymer (nano)particles independently from the particle diameter of the inorganic nanoparticles used as templates and by extension to control the particle diameter and particle dispersity Đ of thereof derived porous carbon (nano)particles.

For a better understanding of the invention, the following explanations of the terminology used herein are considered useful. In the sense of the invention:

- "*Composite polymer particle*" means a particle comprising a polymer matrix with homogeneously distributed inorganic nanoparticles.

- "*Polymer matrix*" means a continuous phase of a polymeric material obtained from one or more precursor monomers forming the composite polymer particle.

- "*Nanoparticle*" means a particle having a particle diameter (particle size) in the nanoscale range between 1 nm and 1000 nm.

- "*Hard-templating approach*", also referred to a hard-template or hard-templated approach, describes a synthetic approach based on polymerization or thermal condensation of a carbon precursor around an inorganic template followed by carbonization. A porous structure is formed by removing the template, which is usually done by etching.

- "*Particle diameter*", also referred to as particle size, indicates the spatial extent of a single particle. Particle diameters are determined by counting out the particle diameters on electron micrographs obtained by scanning (transmission) electron microscopy with a sufficient large number of particles (at least 200 particles). Non-spherical particles (for example elliptical particles) are described by their minimum and maximum diameter.

- "Particle-diameter dispersity Đ" (Đ stroke) is based on the IUPAC definition of dispersity given in Pure Appl. Chem., Vol. 83, No. 12, pp. 2251-2259, 2011. Particle-diameter dispersity Đ measures the width of a particle-diameter distribution and is given by

$$Đ = \frac{\sum N_i \sum N_i\, d_i^{\,4}}{\sum N_i\, d_i\, \sum N_i\, d_i^{\,3}},$$

wherein $N_i$ denotes the number of particles of diameter $d_i$. For a sample of completely uniform particle-diameters Đ would be 1. Narrow particle-diameter distributions having values for Đ < 1.2, preferably < 1.1 are referred to as monodisperse particles. Particle diameter distributions having values for Đ ≥ 1.2, are referred to as polydisperse particles.

- "*Pore volume*" in the sense of the present invention means the volume of the pores as measured by $N_2$ physisorption at 77K and estimated by using the t-plot method for micropores and the total pore volume at a relative pressure $p/p_0$ = 0.98 and/or QSDFT equilibrium model.

- "*Specific surface area*" means the total accessible surface area of a material per mass unit [$m^2g^{-1}$]. The specific surface area is determined by $N_2$ physisorption at 77K. Specific surface areas are calculated using the Brunauer-Emmer-Teller (BET) method fitting the p/p0 range from 0.05 to 0.30 and/or QSDFT equilibrium model.

- "*Pore size*" (pore width) means the distance between two opposite walls of the pore. According to IUPAC nomenclature (Pure & Appl. Chem. Vol. 66, No. 8, pp. 1739-1758, 1994) micropores have width smaller than 2 nm, mesopores have width between 2 and 50 nm, macropores have widths larger than 50 nm.

- "*Derivative of an (organic) compound*" includes all (partially) functionalized compounds in which the organic backbone of the original compound used for functionalization is retained. Examples in the context of the present invention are - without any limitation - 2-Chloro-3-Methylaniline, 1-Aminopyrrole, 3-Hydroxy-4-phenylthiophene where respectively the 2 and 3, the 1 and the 3 and 4 positions are functionalized while the main organic backbone of aniline, pyrrole and thiophene is retained. Furthermore, any other functionalized site of the organic backbone, i.e. aniline, pyrrole and thiophene in these cases, are also considered a derivative.

- "*At least one*" numerically means "*one or more*". In a preferred embodiment, this term numerically means "one".

- "*Comprise*" means that there may be other components in addition to those mentioned. The term "*comprise*" is meant inclusively and therefore includes "*consist of*". "*Consist of*" is meant conclusively and means that no further constituents may be present. In a preferred embodiment, the term "*comprising*" has the meaning "*consisting of*". "

The composite polymer particles according to the invention comprise a polymer matrix and inorganic nanoparticles homogenously distributed within the polymer matrix, wherein the composite polymer particles are obtained by polymerization of a polymerizable carbon source in the presence of dispersed inorganic nanoparticles and an initiator, characterized in that the composite polymer particles have a predefined particle-diameter dispersity Đ and predefined particle diameters. It was surprisingly found that the particle diameter and the particle-diameter dispersity of the composite polymer particles can independently be controlled from the particle diameter of the inorganic nanoparticles by adjusting the molar ratio of initiator to polymerizable carbon source during polymerization reaction.

The thus obtained composite polymer particles form the basis for the production of porous carbon particles. By controlling the particle diameter of the composite polymer particle independently from the particle diameter of the inorganic nanoparticles serving as templates, all subsequent conversions and reactions into the final porous carbon particle can be controlled.

Particle diameters of the composite polymer particles according to the invention can vary in a wide range. In a preferred embodiment the composite polymer particles have particle diameters in the micro- to nano-scaling range, which relates in general to particle diameters up to 5000 nm, preferably up to 4000 nm, preferably up to 3000 nm, preferably up to 2000 nm, preferably up to 1000 nm, and most preferably up to 500 nm. In a preferred embodiment particle diameters of the composite polymer particles range from 1 nm to 5000 nm, preferably from 10 nm to 2000 nm, preferably from 50 nm to 2000 nm and most preferably from 50 nm to 500 nm. Composite polymer particles with particle diameters in the range of 1 nm to 1000 nm are referred to as composite polymer nanoparticles, which are particularly preferred.

Particle-diameter dispersity Đ in general describes the width of a particle diameter distribution. The particle-diameter dispersity Đ of the composite polymer particles is preferably narrow, preferably with Đ < 1.2, more preferably Đ < 1.15, most preferably Đ < 1.1. Such composite polymer particles are also referred to as monodisperse composite polymer particles.

In a preferred embodiment the composite polymer particles are monodisperse with particle diameters in the range of 10 nm to 2000 nm, preferably from 50 nm to 500 nm.

The composite polymer particles of the invention are obtained by polymerization of a polymerizable carbon source in the presence of dispersed inorganic nanoparticles and an initiator.

The inorganic nanoparticles serve as templating agents (templates) during polymerization in a hard-templating approach for synthesis of porous carbon particles. The hard-templating approach is based on polymerization or thermal condensation of a polymerizable carbon precursor around an inorganic template.

The term polymerizable carbon source in sense of the present invention relates to all carbon sources being able to be polymerized into a polymer matrix.

In one embodiment the polymerizable carbon source is a precursor monomer that is able to undergo oxidative polymerization to form a polymer matrix. Examples of suitable precursor monomers for oxidative polymerization are aniline, phenazine, carbazole, pyrrole, dopamine, thiophene and derivates thereof.

In another embodiment the polymerizable carbon source is a precursor monomer that is able to undergo a condensation reaction to form a polymer matrix. Examples of suitable precursor monomers for condensation polymerization are melamine, cyanamide, resorcinol, glucose, amino acids with aromatic residuals and derivatives thereof.

In another embodiment the polymerizable carbon source is a precursor monomer that is able to undergo self-propagating and non-stochiometric radical polymerization to form a polymer matrix. Examples of suitable precursor monomers for radical polymerization are N-(Hydroxymethyl)acrylamide, 3-(2-pyridyl)acrylic acid, 3-(2-pyrrol)acrylic acid, 1-Vinylpyrrole, 1-Vinylpyridin, 2-Vinylthiophene and derivates thereof.

In a particularly preferred embodiment the polymerizable carbon source is a precursor monomer that is able to undergo oxidative polymerization.

In one embodiment the molar concentration of the polymerizable carbon source during polymerization reaction ranges from 0.05 mol $l^{-1}$ to 1 mol $l^{-1}$, preferably from 0.09 mol $l^{-1}$ to 0.24 mol $l^{-1}$.

In a preferred embodiment the polymerizable carbon source is aniline and the molar concentration of aniline during polymerization reaction ranges from 0.05 mol $l^{-1}$ to 1 mol $l^{-1}$, preferably from 0.09 mol $l^{-1}$ to 0.24 mol $l^{-1}$.

The term polymer matrix in the sense of the present invention means a continuous phase of a polymeric material. The polymer matrix can be a homopolymer or a copolymer. By copolymer herein is meant a copolymer which is obtainable by reacting two or more precursor monomers.

Inorganic nanoparticles are homogenously distributed within the polymer matrix. Homogenous distribution describes a regular distance between the individual inorganic particles within the polymer matrix. Homogenous distribution is achieved by self-assembling of the inorganic particles during polymerization reaction. Without wishing to be bound by theory self-assembly takes place as a result of electrostatic interactions between the inorganic nanoparticle and the polymer matrix.

In one embodiment the pH value at the beginning and during polymerization is controlled to support the self-assembling process. Depending on the polymerizable carbon source the pH value might range from 0 to 14. In the preferred embodiment in which the polymerizable carbon source comprises aniline, preferably the pH value is in the acidic range, preferably between 0 and 5, preferable between 0 and 3, preferably 0 and 1 and most preferably between 0 and 0.85.

The term inorganic nanoparticle in the sense of the present invention describes an inorganic template molecule in the nano-scale range. In a preferred embodiment the inorganic nanoparticles have particle diameters ranging from 1 nm to 1000 nm, preferably ranging from 1 nm to 800 nm, more preferably ranging from 2 nm to 700 nm, more preferably ranging from 3 nm to 600 nm, more preferably ranging from 4 nm to 500 nm, more preferably ranging from 5 nm to 100 nm.

In a preferred embodiment the inorganic nanoparticles a have predefined particle-diameter dispersity Đ. The particle-diameter dispersity Đ of the inorganic nanoparticles is preferably Đ < 1.2, more preferably Đ < 1.15, most preferably Đ < 1.1. Corresponding particle-diameter distributions are also referred to as monodisperse. In a particularly preferred embodiment, the inorganic nanoparticles are monodisperse.

In another embodiment it might be possible that the distribution of particle diameters of the inorganic nanoparticles is multimodal, preferably bimodal. Bimodally distributed particle diameters of inorganic nanoparticles can be obtained by mixing two monodisperse inorganic nanoparticles. Multimodally, preferably bimodally, distributed particle diameters of inorganic nanoparticles can be used to further tailor intramolecular properties of porous carbon particles, for example in terms of pore size distribution.

The geometry of the inorganic template molecule predetermines the pore geometry of the porous carbon particle, which is obtained from the composite polymer particle according to the invention. Depending on the desired pore size, pore volume and pore geometry, the inorganic template molecule can assume any geometry, such as spherical, elliptical, coral-like or star-shaped. A spherical or elliptical geometry is preferred. The geometry of the inorganic nanoparticles can be uniform or non-uniform, wherein a uniform geometry of the nanoparticles is preferred.

In one embodiment the inorganic nanoparticle is selected from the group consisting of $SiO_2$, metal oxides, inorganic salts or mixtures thereof. $SiO_2$ is particularly preferred.

In a particularly preferred embodiment, the inorganic nanoparticle is $SiO_2$ of spherical shape with particle diameters in the range of 1 nm to 800 nm, more preferably ranging from 2 nm to 700 nm, more preferably ranging from 3 nm to 600 nm, more preferably ranging from 4 nm to 500 nm, more preferably ranging from 5 nm to 100 nm. Monodisperse $SiO_2$ particles of the aforementioned particle diameters are particularly preferred.

At the beginning of the polymerization reaction, the inorganic nanoparticles are present in the form of a colloidal dispersion. Suitable dispersion media for dispersing the inorganic nanoparticles include polar solvents stabilizing the inorganic nanoparticles. Suitable polar solvents are water, alcohols or aqueous solutions of alcohols. Particularly preferred are water, methanol, ethanol or mixtures thereof.

It is particularly preferred that the reaction temperature is controlled during polymerization. In a preferred embodiment the reaction temperature is set below 30 °C, preferably below 25°C, preferably below 20°C, preferably below 10°C, preferably below 4 °C, preferably below 0 °C. Depending on the dispersion medium it might be possible to set the reaction temperature below -4 °C. Particularly preferred is a temperature range between 30 °C and -10 °C, preferably between 20 °C and -4°C, most preferably between 5 and 0 °C. In general, it is assumed that the reaction temperature has an influence on particle diameter distribution of the composite polymer particles. Lower temperatures usually lead to a narrower particle diameter distribution of the composite polymer particles.

To start polymerization reaction, the addition of an initiator is required. The selection of a suitable initiator to start the polymerization reaction depends on the selection of the polymerizable carbon source. In the case of a stochiometric radical (oxidative) polymerization, the initiator is a radical generating agent and is consumed throughout the reaction and not incorporated in the polymer matrix, whereas in a self-propagating radical polymerization the radical generating initiator is neither stochiometric nor incorporated in the polymer matrix. In the case of a condensation polymerization the initiator is defined as at least one of the monomer reactants, when at least two monomer reactants are used, and incorporated in the polymer matrix.

Suitable initiators for precursor monomers for oxidative polymerization are among others persulfates, such as ammonium persulfate ($(NH_4)_2S_2O_8$), sodium persulfate ($Na_2S_2O_8$) or potassium persulfate ($K_2S_2O_8$), or oxygen or metal chlorides, such as $FeCl_3$ or $CuCl_2$. Suitable other initiators for oxidative polymerization are for example hydrogen peroxide $H_2O_2$ or $NaIO_4$. The use of persulfates, particularly ammonium persulfate ($(NH_4)_2S_2O_8$), is preferred.

Suitable initiators for precursor monomers for condensation polymerization are among others formaldehyde for the polymerization of (multi) hydroxylated aromatic compounds, preferably resorcinole, or acid chloride aromatic compounds, preferably terephthaloyl chloride or for the polymerization of di- (or multi) aminated aromatic compounds, preferably 1,4-Diaminobenzol and derivatives and mixtures thereof.

Suitable initiators for precursor monomers for radical polymerization are among others ((2,2,6,6-Tetramethylpiperidin-1-yl)oxyl) (TEMPO), benzoyl peroxide, azobisisobutyronitrile and ammonium persulfate.

Some applications of porous carbon particles require the presence of heteroatoms in the porous carbon particle structure. It should be noted that heteroatoms, particularly nitrogen atoms are easily introduced by the polymerizable carbon source, e.g. if aniline is used an N-doped carbon particle is obtained from the respective composite polymer particle.

However, for certain applications it might be relevant to introduce higher concentrations of certain heteroatoms or to introduce heteroatom doping in the porous carbon particle structure which cannot be introduced via the polymerizable carbon source. In these cases heteroatom doping takes place via additives being added during or directly after the polymerization reaction of the composite polymer particles or added to the dried composite polymer particles prior to carbonization. Suitable additives are among others for example urea, $NH_4OH$, cyanamide, dopamine, melamine for N heteroatom doping, borax or boric acid for boron heteroatom doping, $P_2O_3$, $H_3PO_4$, $PPh_3$ for P heteroatom doping, sulfur, thiophenol, DMSO, $NaSO_3$, $H_2SO_4$ for S heteroatom doping and $Na_2SeO_3$, $Na_2SeO_4$ for Se heteroatom doping.

According to the present invention the molar ratio of the initiator is used to control the particle diameter and the particle-diameter dispersity Đ independently from each other and independently from the particle diameter of the inorganic nanoparticle used as templating molecule. Overall, the particle diameter and the particle-diameter dispersity of the composite polymer particles can independently be controlled from the particle diameter of the inorganic nanoparticles by adjusting the molar ratio of initiator to polymerizable carbon source during polymerization reaction.

In one embodiment the molar ratio of the initiator to polymerizable carbon source is not equimolar. In a preferred embodiment the molar ratio of the initiator to polymerizable carbon source is not equimolar and ranges from 0.01 to 10, preferably from 0.05 to 5, and most preferably from 0.1 to 2. It has been found that increasing the molar ratio of the initiator relative to the polymerizable carbon source leads to an increase of particle diameter of the composite polymer particle and vice versa.

It is particularly preferred that the initiator is added subsequently during the polymerization reaction. The addition rate of the initiator preferably ranges from 0.1 ml min$^{-1}$ l$^{-1}$ to 200 ml min$^{-1}$ l$^{-1}$, preferably from 1 ml min$^{-1}$ l$^{-1}$ to 3 ml min$^{-1}$ l$^{-1}$.

In addition to the adjustment of the molar ratio of initiator to polymerizable carbon source, the molar ratio of initiator to specific surface area of the inorganic nanoparticle can be used as an additional adjustment parameter to further control the particle-diameter of the composite polymer particle. It has been found that increasing the molar ratio of the initiator relative to the specific surface area of the inorganic nanoparticles leads to an increase of particle diameter of the composite polymer particle and vice versa.

The specific surface area of the inorganic nanoparticles is theoretically determined by the surface area of a sphere with a given radius and experimentally determined by $N_2$ physisorption and the BET method.

In the preferred embodiment in which the polymerizable carbon source is aniline the molar ratio of the inorganic nanoparticle to the polymerizable carbon source is from 0.1 to 20, preferably from 1 to 3, most preferably 1.8.

A second object of the present invention is a method for independently controlling the particle diameter and particle-diameter dispersity Đ of composite polymer particles, wherein the composite polymer particles comprise a polymer matrix and inorganic nanoparticles homogenously distributed within the polymer matrix, wherein the composite polymer particles are obtained by polymerization of a polymerizable carbon source in the presence of dispersed inorganic nanoparticles and an initiator, characterized in that the particle-diameter dispersity Đ and the particle diameter are independently controlled by the molar ratio of initiator to polymerizable carbon source during polymerization reaction.

All statements, particularly with respect to the polymerizable carbon source, the inorganic nanoparticles (templates) and the initiator apply to the same extent to the method for independently controlling the particle diameter and particle-diameter dispersity Đ of composite polymer particles.

A third object of the invention are porous carbon particles obtained from composite polymer particles according to the invention.

In a preferred embodiment the porous carbon particles are obtained from the inventive composite polymer particles, wherein the composite polymer particles have been treated in a consecutive manner with the following steps:

a. collecting, washing and drying the composite polymer particles,

b. calcination of the composite polymer particles under an inert atmosphere or reactive atmosphere below 1100 °C to obtain a carbonized reaction product,

c. etching the carbonized reaction product to obtain an etched carbonized reaction product,

d. separating and washing the etched carbonized reaction product,

e. drying the etched carbonized reaction product, and

f. temperature annealing of the etched carbonized reaction product under an inert or reactive atmosphere in a temperature range from 300 to 3000 °C.

Step a) includes collecting, washing and drying of the composite polymer particles. Collection of the composite polymer particles might include filtration, (continuous) centrifugation, sedimentation and/or diafiltration, wherein collection by diafiltration is particularly preferred. Washing of the obtained material is preferably repeated until the pH value of the washing solution is neutral. Washing agents might be polar solvents, such as water or aqueous solutions of $C_1$-$C_4$ alcohols. To prevent morphology changes of the composite polymer particles the material after washing is subjected to drying, preferably freeze-drying.

Calcination, also known as pyrolysis or carbonization, according to process step b) leads to carbonization of the composite polymer particles. Calcination can either be performed under inert atmosphere by using $N_2$ or Ar or under reactive atmosphere by using for example air, $O_2$, CO, $CO_2$, $NH_3$ or $H_2S$. Calcination under reactive atmosphere can be used to introduce heteroatoms (doping) into the resulting carbon particle which might be useful for certain applications.

It is essential that the calcination process is performed below 1100 °C. Above this temperature, the inorganic template might react with the polymer matrix. In cases where the inorganic template is $SiO_2$ this might lead to silicon carbide formation which interferes with the etching process.

To remove the inorganic nanoparticles (templates) from the carbonized composite polymer particles the carbonized composite polymer particles are subjected to chemical etching according to process step c). Suitable etching agents are those etching agents known to the person skilled in the art. If the inorganic template is $SiO_2$ etching agents can be selected for example from hydrogen fluoride HF, ammonium fluoride $NH_4F$, ammonium hydrogen difluoride $NH_4HF_2$ or from a concentrated solution of NaOH or KOH. The concentration of the etching agent ranges from 0.1 to 30 mol l$^{-1}$, preferably from 0.1 to 10 mol l$^{-1}$. The etching process is preferably performed for a period of time of at least 10 min, preferably of at least 1 hour, preferably of at least 12 hours, preferably of at least 24 hours, preferably for at least 48 hours. Furthermore, the etching process is conducted at a given temperature between 0°C and 150°C, preferably between 0°C and 100°C, preferably between 0°C and 50 °C, preferably between 0°C and 25°C and most preferably between 20 - 25°C.

Depending on the application of the porous carbon particle the etching process might also be carried out in such a way that the inorganic templates are only partially removed.

Separating and washing of the etched carbonized reaction product (step d) is preferably performed by filtration and/or centrifugation followed by redispersion of the filtrate in a polar solvent, preferably water, and stirred for at least 12 hours to remove residual etching agents. Washing is preferably repeated until a pH neutral dispersion is obtained.

Drying of the etched carbonized reaction product (step e) is preferably performed under vacuum.

Temperature annealing according to step f) might be used to obtain higher degrees of graphitization. Temperature annealing can be performed in a temperature range from 300 to 3000 °C, for example at 1150 °C, 1300 °C, 1500 °C, 1700 °C and 2000 °C. In general, an increase in temperature leads to an increased degree of graphitization but decreases the amount of heteroatoms and the porosity. It is noted, that particularly in the temperature range between 2000 °C and 3000 °C porosity of the porous carbon particles will decrease because at least part of the pores will collapse or close. This phenomenon can also occur to a minor extent at lower temperatures. If desired, collapsed pores of the carbon particles can be - at least partially - regenerated by applying activation processes such as wet-chemical treatments and/or thermal treatments under reactive gases.

Temperature annealing is performed for a period of at least 60 minutes, preferably for at least 120 minutes. Temperature annealing can be performed under inert atmosphere by using $N_2$ or Ar or under reactive atmosphere by using for example - air, $O_2$, CO, $CO_2$, $NH_3$ or $H_2S$.

In one embodiment the thus obtained porous carbon particles can further be functionalized by wet chemical processes at any temperature and/or under an inert or reactive gas atmosphere at any temperature, preferably under thermal treatment. Functionalization might include functionalization by wet chemical methods with and without thermal treatment (amongst others, oxidation with $HNO_3$, $KMnO_4$, $H_2SO_4$, $H_2O_2$) and or thermal treatment under reactive gas atmosphere (amongst others air, $O_2$, CO or $CO_2$, $NH_3$, $H_2S$, sulfur, urea).

Particle diameters of the porous carbon particles according to the invention can vary in the same range as the particle diameters of the composite polymer particles from which they are produced. In a preferred embodiment the porous carbon particles have particle diameters in the micro- to nano-scaling range, which relates in general to particle diameters up to 5000 nm, preferably up to 4000 nm, preferably up to 3000 nm, preferably up to 2000 nm, preferably up to 1000 nm, and most preferably up to 500 nm. In a preferred embodiment particle diameters of the porous carbon particles range from 1 nm to 5000 nm, preferably from 10 nm to 2000 nm, preferably from 50 nm to 2000 nm and most preferably from 50 nm to 500 nm. Porous carbon particles with particle diameters in the range of 1 to 1000 nm are referred to as porous carbon nanoparticles, which are particularly preferred.

In one embodiment the particle-diameter dispersity Đ of the porous carbon particles is preferably narrow, preferably with Đ < 1.2, more preferably Đ < 1.15, most preferably Đ < 1.1. Porous carbon particles with Đ < 1.2 are also referred to as monodisperse.

In a preferred embodiment the porous carbon particles are monodisperse carbon particles with particle diameters in the range of 10 nm to 2000 nm, preferably from 50 nm to 500 nm.

The obtained porous carbon particles have large specific areas and large pore volumes.

In a preferred embodiment porous carbon particles comprise a specific surface area ranging between 25 m$^2$g$^{-1}$ and 2000 m$^2$g$^{-1}$, preferably 200 m$^2$g$^{-1}$ and 1500 m$^2$g$^{-1}$.

In a further preferred embodiment porous carbon particles comprise pore volumes ranging between 0.1 cm$^3$ g$^{-1}$ and 5.0 cm$^3$ g$^{-1}$, preferably 0.25 cm$^3$ g$^{-1}$ and 3.0 cm$^3$ g$^{-1}$.

In one embodiment the porous carbon particles have mesopores. In another embodiment the porous carbon particles have micropores. In preferred embodiment the porous carbon particles are nanoparticles with mesopores and/or micropores and/or macropores.

In one embodiment the porous carbon particles are N-doped porous carbon particles, preferably N-doped porous carbon nanoparticles (MPNC).

A fourth object of the invention is also a method for independently controlling the templated pore size and particle diameter of porous carbon particles. The method comprises the following steps of

> a. Synthesis of composite polymer particles of predefined particle-diameter dispersity Đ and predefined particle diameters by polymerization of a polymerizable carbon source in the presence of dispersed inorganic nanoparticles used as template and an initiator, wherein the particle-diameter dispersity Đ and the composite polymer particle diameters are controlled by the molar ratio of initiator to polymerizable carbon source during polymerization reaction,
> b. collection, washing and drying of the composite polymer particles,
> c. calcination of the composite polymer particles under inert atmosphere or reactive atmosphere below 1100 °C to obtain a carbonized reaction product,
> d. etching the carbonized reaction product to obtain an etched carbonized reaction product,
> e. separating and washing the etched carbonized reaction product,
> f. drying the etched carbonized reaction product,
> g. temperature annealing of the etched carbonized reaction product under an inert or reactive atmosphere in a temperature range from 300°C up to 3000 °C.

If applicable, all aforementioned statements apply to the same extent to the method for independently controlling the particle diameter and particle-diameter dispersity Đ of composite polymer particles.

In one embodiment the method might optionally include a functionalization step h) in which the porous carbon particles are further functionalized. Functionalization might include functionalization by wet chemical methods with and without thermal treatment (amongst others, oxidation with $HNO_3$, $KMnO_4$, $H_2SO_4$, $H_2O_2$) and or thermal treatment under reactive gas atmosphere (amongst others air, $O_2$, CO or $CO_2$, $NH_3$, $H_2S$, sulfur, urea).

A fifth object of the invention is also an article of manufacture comprising the composite polymer particles and/or the porous carbon particles according to the invention. In principle, articles of manufacture comprising the composite polymer particles and/or the porous carbon particles of the invention might have a broad range of application.

In a preferred embodiment the article of manufacture is one of the group consisting of catalysts, conductive additives, gas diffusion layers, electrodes for energy converters (fuel cells, electrolyzers) or energy storage devices (batteries (LIB, NIB, organic batteries, redox-flow batteries), supercapacitors (EDLC and pseudocapacitors) as well as hybrid capacitors) as well as sensors or parts thereof.

In another embodiment the article of manufacture can be an article of manufacture which is used for drug delivery, adsorption applications (oil, alkanes, phenols, heavy metals etc.), water purification applications (capacitive desalination).

A sixth object of the invention is the use of the adjustment of the molar ratio of an initiator to a polymerizable carbon source in a hard-templating approach to control the particle diameter and particle-diameter dispersity Đ of composite polymer particles independently from the particle diameter of inorganic nanoparticles used as templating agents. If applicable, all aforementioned statements apply to the same extent to the inventive use.

Description of Figures

Figure 1: General approach for the synthesis of composite polymer particles and porous carbon particles with the general approach.

Figure 2: General approach for pore size and particle diameter control of porous carbon particles.

Figure 3: Temperature post treatment of porous carbon particles for higher degrees of graphitization.

Figure 4: SEM images of the $SiO_2$ nanoparticle templates and composite polymer particles (PANI-$SiO_2$) as synthesized and after carbonization as well as particle size distribution of the PANI-$SiO_2$ composite polymer particles for MPNC-12-300-1000 (a-d), MPNC-23-300-1000 (e-h), MPNC-30-300-1000 (i-l), MPNC-60-300-1000 (m-p), and MPNC-100-300-1000 (q-t). Insets show the particle size distribution of the used templates.

Figure 5: SEM and TEM images and particle diameter distributions of porous carbon nanoparticles with different pore sizes carbonized at 1000 °C. MPNC-12-300-1000 (a-d), MPNC-23-300-1000 (e-h), MPNC-30-300-1000 (i-l), MPNC-60-300-1000 (m-p) and MPNC-100-300-1000 (q-t).

Figure 6: X-ray diffraction patterns (a), elemental analysis (b) and raman analysis with a typical spectrum (c) and the five fitted raman band integral areas (d) for obtained porous carbon nanoparticles with different pore sizes carbonized at 1000 °C, showing no chemical differences between the samples.

Figure 7: Physisorption isotherms (a), pore size distribution (b), cumulative pore volume and surface area (c), the corresponding total pore volume (d) and specific surface area (e) of porous carbon particles with different pore sizes carbonized at 1000 °C.

Figure 8: SEM and TEM images and particle size distributions of porous carbon nanoparticles with different particle sizes carbonized at 1000 °C produced by varying the molar ratio of APS to aniline: 1:10 - MPNC-7-50-1000 (a-d), 1:4 - MPNC-7-90-1000 (e-h), 1:1 - MPNC-7-130-1000 (i-l), 2:1-MPNC-7-170-1000 (m-p).

Figure 9: X-ray diffraction patterns (a), elemental analysis (b) and raman analysis with a typical spectrum (c) and the five fitted raman band integral areas (d) for obtained porous carbon nanoparticles with different particle sizes carbonized at 1000 °C, showing no chemical differences between the samples.

Figure 10: Physisorption isotherms (a), pore size distribution (b), cumulative pore volume and surface area(c), the corresponding total pore volume (d) and specific surface area (e) of porous carbon nanoparticles with different particle sizes carbonized at 1000 °C.

Figure 11: SEM and TEM images and particle diameters distributions of porous carbon nanoparticles carbonized at 1150 °C (MPNC-23-300-1000-1150) (a), 1300 °C (MPNC-23-300-1000-1300) (b), 1500 °C (MPNC-23-300-1000-1500) (c), 1700 °C (MPNC-23-300-1000-1700) (d) and 2000 °C (MPNC-23-300-1000-2000) (e). Raman spectra (f), X-ray diffraction patterns (g) and elemental analysis (h) for porous carbon nanoparticles after the post-treatment at higher temperatures.

Figure 12: Physisorption isotherms (a), pore size distribution (b), cumulative pore volume and surface area (c), the corresponding total pore volume (d) and specific surface area (e) of porous carbon nanoparticles carbonized/annealed at different temperatures between 1000 °C-2000 °C.

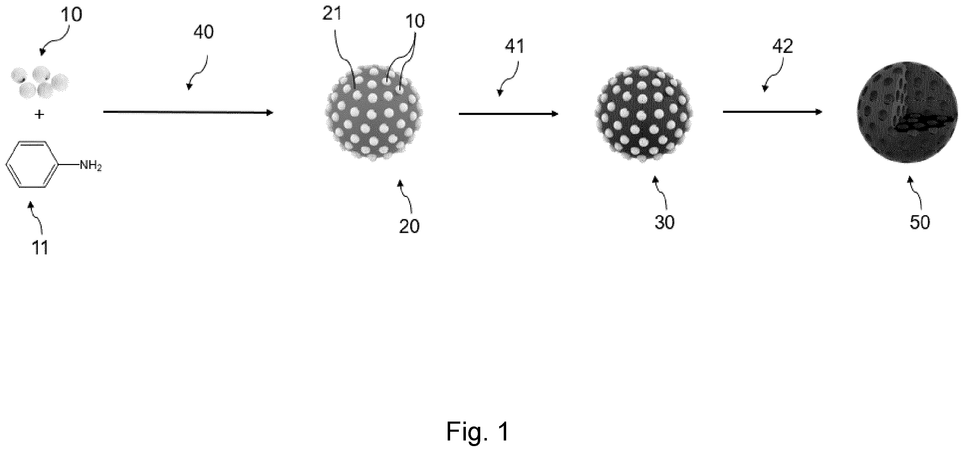

Figure 1 shows the general synthetic strategy to obtain composite polymer particles 20 and porous carbon particles 50. As a template for the synthesis of composite polymer particles inorganic nanoparticles 10, particularly silica ($SiO_2$) nanoparticles, are used, while aniline - representing a preferred precursor monomer 11 according to the present invention - acts as a polymerizable carbon precursor and a nitrogen source. In a first step 40, the monomer 11 is added to an inorganic nanoparticles 10 containing dispersion. This results in the adsorption of the monomers 11 on the surface of the inorganic nanoparticles 10 (not shown). Further addition of an initiator catalyzes the polymerization of the monomers into a polymer (not shown). This process is followed by a self-assembly of the polymer leading to the formation of composite polymer particles 20 with homogenous distribution of inorganic nanoparticles 10 within the polymer matrix 21.

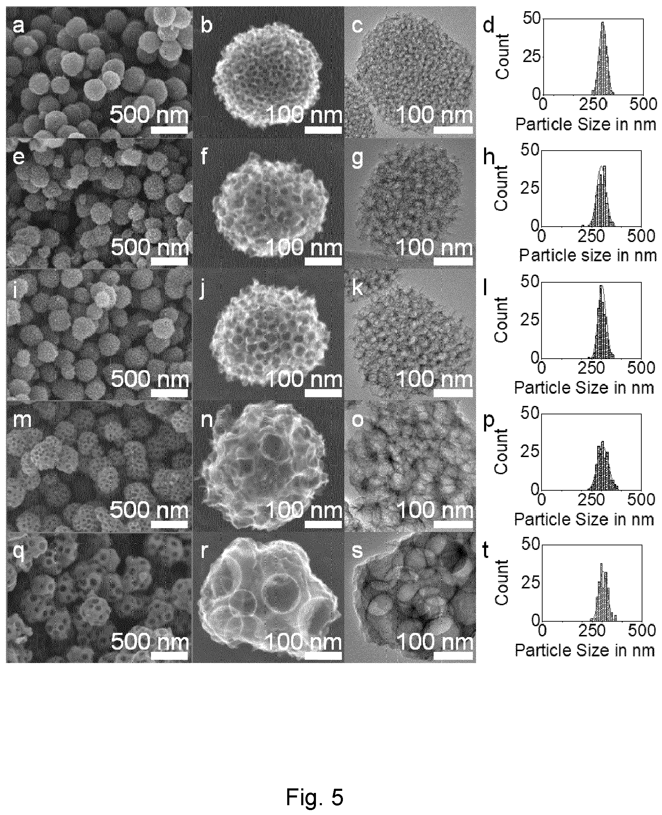

In the preferred embodiment, in which aniline and silica are used as monomer 11 and inorganic nanoparticle 10, the strong oxidation agent ammonium persulfate (APS) catalyzes the aniline polymerization into polyaniline (PANI), which is then followed by the self-assembly of PANI and silica, leading to the formation of PANI/$SiO_2$ composite polymer particles with a spherical shape and homogeneous distribution of $SiO_2$ nanoparticles along the PANI framework. The synthesis is followed by collecting, washing and freeze-drying of the PANI/$SiO_2$ composite polymer particles (not shown in Figure 1). Carbonization 41 leads to carbonized composite polymer particles 30, which then undergo template etching 42 resulting in porous carbon particles with preservation of the spherical shape and well-defined porous structure as can be seen from the TEM and SEM analysis shown in Figure 5.

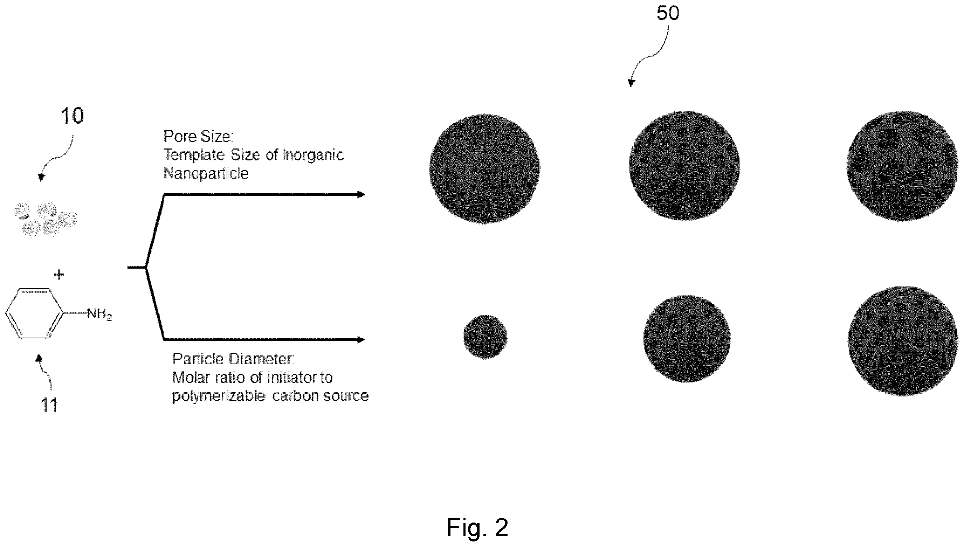

Figure 2 shows the use of different particle sizes of silica nanoparticles 10 with particle diameters varying from 7 to 100 nm while maintaining all the other synthesis parameters constant leading to porous carbon particles 50 with pore sizes in the range from 7 to 100 nm while the particle diameter can be kept constant. Variation of the molar ratio of the initiator to the polymerizable carbon source 11 (e.g. aniline) allows tailoring of particle diameters while keeping the pore size constant.

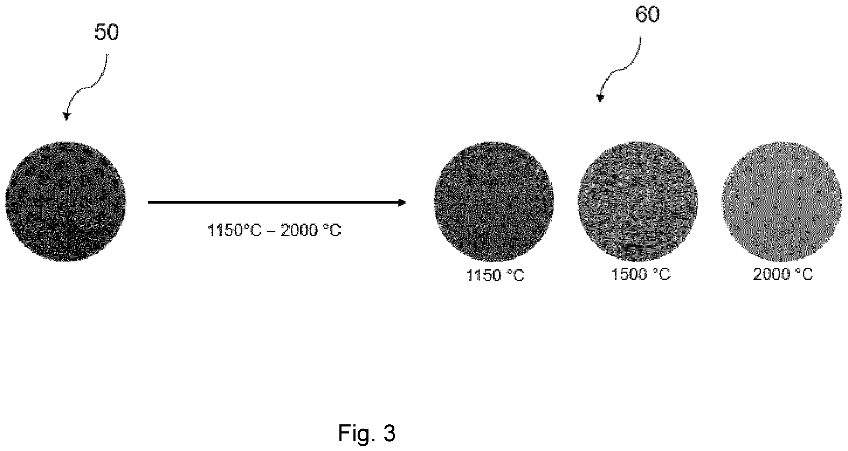

Figure 3 shows the post-treatment of porous carbon (nano)particles 50 at temperatures between 1150 °C and 2000 °C. Temperature annealing might be used to obtain porous carbon (nano)particles 60 with higher degrees of graphitization without significant changes of the morphology of porous carbon (nano)particles.

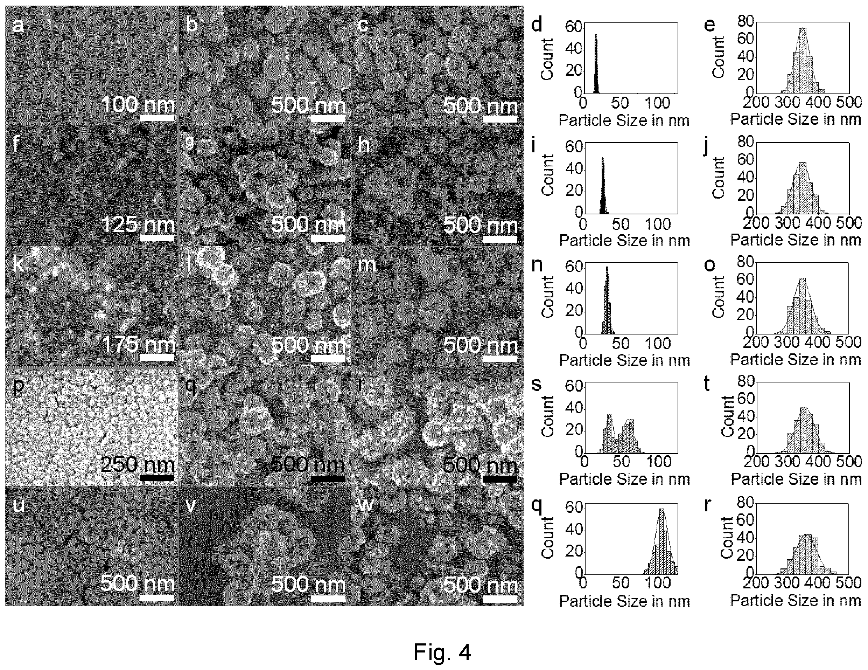

Figure 4 shows SEM images of the $SiO_2$ nanoparticle templates and composite polymer particles (PANI-$SiO_2$) as synthesized and after carbonization as well as particle size distribution of the PANI-$SiO_2$ composite polymer particles for MPNC-12-300-1000 (a-d), MPNC-23-300-1000 (e-h), MPNC-30-300-1000 (i-l), MPNC-60-300-1000 (m-p) and MPNC-100-300-1000 (q-t). Insets show the particle size distribution of the inorganic nanoparticles used as templates. In all cases, independently on the template size all PANI-$SiO_2$ composite polymer particles are composed of highly monodisperse nanoparticles with a particle diameter centered around 350 nm, as demonstrated by SEM.

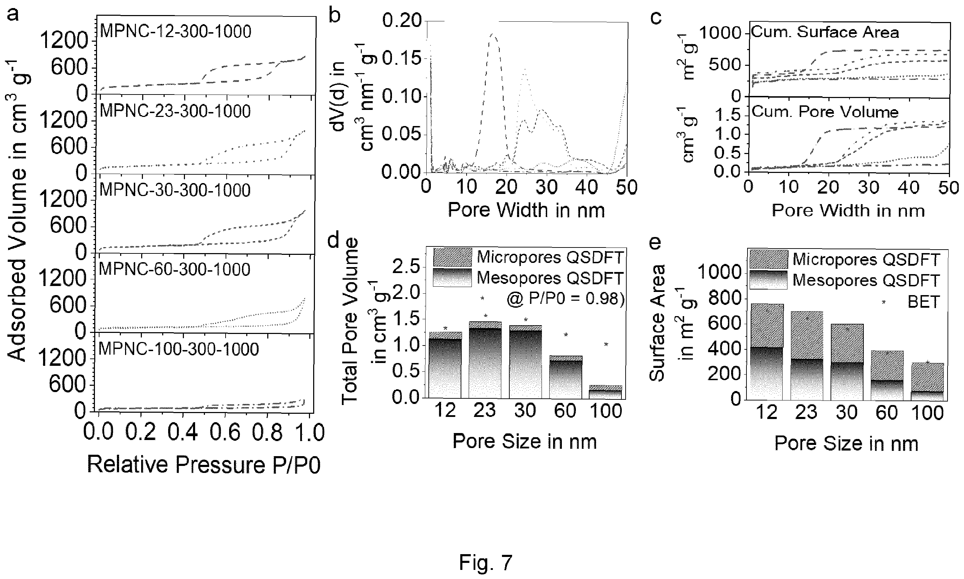

Figure 5 shows scanning electron microscopy (SEM) and transmission electron microscopy (TEM) images and particle size distributions of produced porous carbon particles with different pore sizes carbonized at 1000 °C. It can be seen that using different diameters of inorganic nanoparticles (in the present case 12, 23, 30, 60, and 100 nm $SiO_2$ nanoparticles) while maintaining all the other synthesis parameters constant, the pore size of porous carbon particles can be tailored in the range from 12 to 100 nm, and as a result - pore volume (1.34 - 1.05 $cm^3\,g^{-1}$) (shown in Figure 7d) and specific surface area (1060 - 305 $m^2\,g^{-1}$) (shown in Figure 7). For explanation, the obtained samples are denoted as MPNC-TS-PS-CT with TS = template size, PS = particle size and CT = calcination/pyrolysis temperature (MPNC-pore size-particle size-calcination temperature) (Figure 2).

In all cases, independently on the obtained pore size (template size) all the porous carbon particles are composed of highly monodisperse nanoparticles (also referred to as nanospheres) with a particle diameter centered around 300 nm, as demonstrated by SEM.

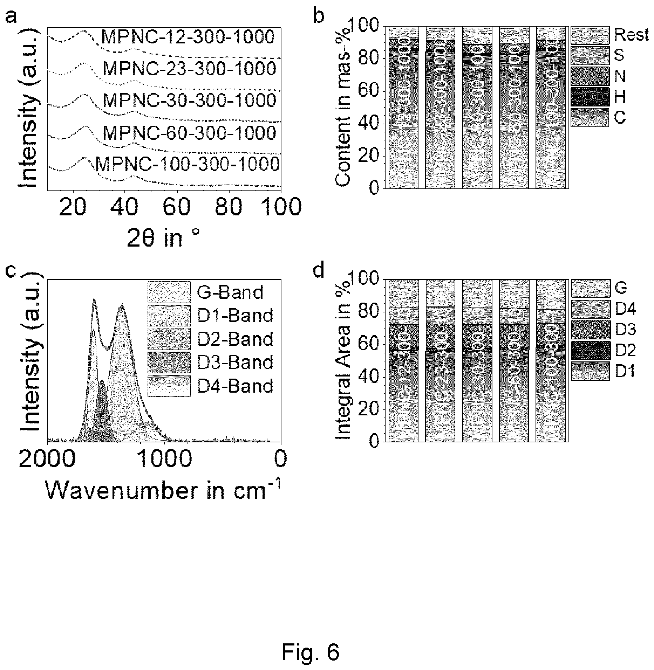

Figure 6 shows X-ray diffraction patterns (a), elemental analysis (b) and raman analysis with a typical spectrum (c) and the five fitted raman band integral areas (d) for obtained porous carbon nanoparticles with different pore sizes carbonized at 1000 °C, showing no chemical differences between the samples.

To investigate the pore structure of the MPNC nanospheres, nitrogen physisorption was used. Figure 7 shows physisorption isotherms (a), pore size distribution determined by QSDFT (b), cumulative pore volume and surface area determined by QSDFT (c), the corresponding total pore volume determined at p/p0 = 0.98 and/or QSDFT (d) and specific surface area determined by BET and/or QSDFT (e) of porous carbon particles with different pore sizes carbonized at 1000 °C. It can be seen that all samples show isotherms with a visible hysteresis that can be attributed to the mesopores in the materials. In the pore width distribution, it is visible, that the main pore widths correspond to the size of the used templates, wherein pore sizes are slightly larger than template sizes. For the different pore sizes high pore volumes between 1.34 and 1.05 $cm^3\,g^{-1}$ (1.26 to 0.26 with QSDFT) and surface areas between 305 and 705 $m^2g^{-1}$ (301 to 763 $m^2g^{-1}$ with QSDFT) were measured.

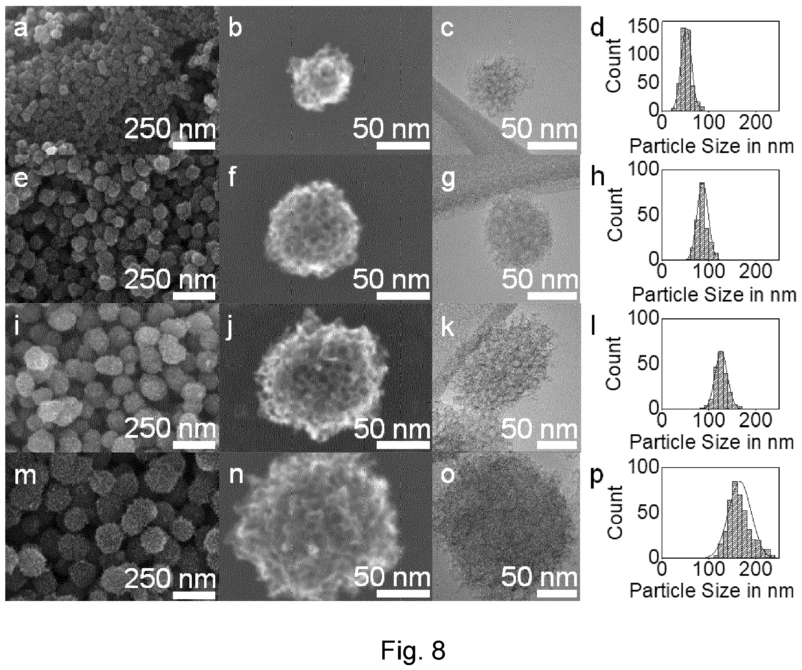

Figure 8 shows SEM and TEM images and particle diameter distributions of porous carbon nanoparticles with different particle sizes carbonized at 1000 °C produced by varying the molar ratio of initiator (APS) to aniline: 1:10 - MPNC-7-50-1000 (a-d), 1:4 - MPNC-7-90-1000 (e-h), 1:1 - MPNC-7-130-1000 (i-l), 2:1 - MPNC-7-170-1000 (m-p).

To tune the particle diameter different molar initiator APS to aniline ratios were used, as exemplified for MPNC-7-X-1000. Using lower amounts of the initiator (APS) slows down the reaction of the oxidative polymerization of aniline. This limits the PANI chain growth while favoring the interaction of ANI+-$SiO_2$ resulting in formation of smaller particles. When keeping the APS/ANI ratio at 1:1, MPNC-7-X-1000 with particle sizes X of 130 nm were obtained (denoted as MPNC-7-130-1000) (Figure 8 i-l). However, decreasing the amount of APS in the reaction while keeping all the other parameters constant resulted in porous carbon particles with sizes of 90 nm for APS/ANI of 1:4 (MPNC-7-90-1000) (Figure 8 e-h) and 50 nm for 1:10 (MPNC-7-50-1000) (Figure 8 a-d). In turn, by increasing the APS/ANI molar ratio to 2:1, it is possible to increase the particle diameter of the porous carbon particle to 170 nm (Figure 8 m-p).

As can be seen by SEM, in all cases, the spherical shape of the particles is maintained, and a sharp particle size distribution is obtained. Only for MPNC-7-170-1000 the distribution was broadened slightly due to the high amount of initiator.

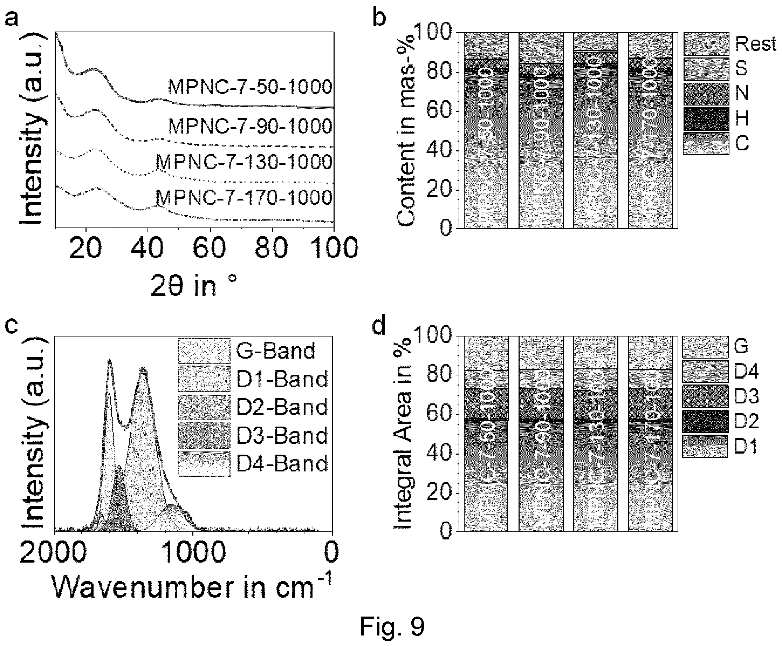

Figure 9 shows X-ray diffraction patterns (a), elemental analysis (b) and raman analysis with a typical spectrum (c) and the five fitted raman band integral areas (d) for obtained porous carbon nanoparticles with different particle diameters carbonized at 1000 °C, showing no chemical differences between the samples.

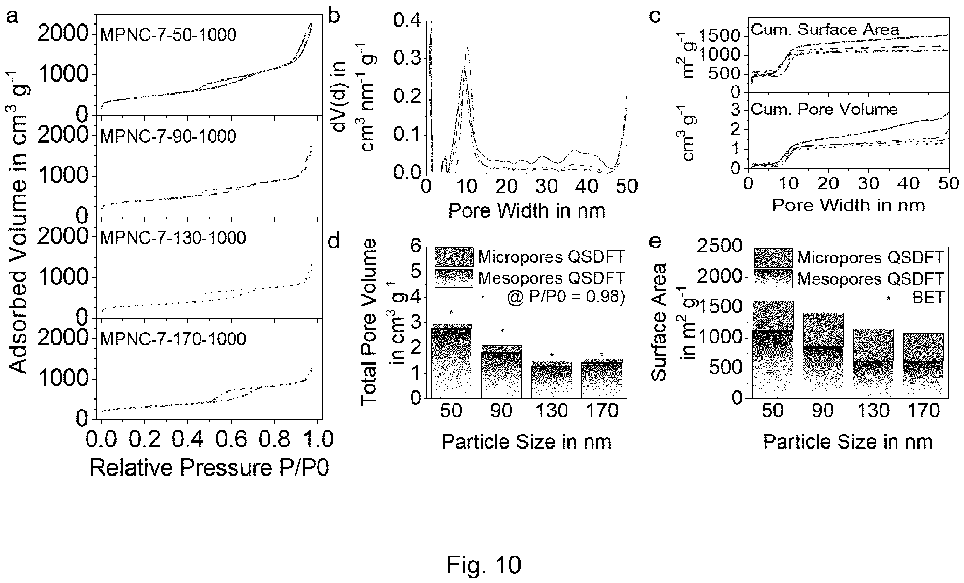

Figure 10 shows physisorption isotherms (a), pore size distribution determined by QSDFT (b), cumulative pore volume and surface area from QSDFT (c), the corresponding total pore volume determined at p/p0 = 0.98 and/or by QSDFT (d) and specific surface area (e) determined by BET and/or QSDFT of porous carbon nanoparticles with different particle sizes carbonized at 1000 °C.

Figure 10 shows the specific surface areas, calculated using a quenched solid density functional theory model to fit the experimental data showed that MPNC-7-50-1000 features the highest values of the SSA of 1515 $m^2/g$ (1606 $m^2\,g^{-1}$ with QSDFT). As expected, increasing of the MPNC particle diameters to 90, 130 and 170 nm induced a decrease in SSA, to 1387, 1061 and 1022 $m^2\,g^{-1}$ (1406, 1150 and 1078 $m^2\,g^{-1}$ with QSDFT), respectively. The same trend was observed for the cumulative pore volume (Figure 10 c), which gradually decreases with the particle diameter increasing.

The cumulative pore volume was calculated to be in the range of 3.42 - 1.76 $cm^3$ $g^{-1}$ (2.97 to 1.56 $cm^3$ $g^{-1}$ with QSDFT) with the contribution of micropore volume of 0.2±0.05 $cm^3$ $g^{-1}$ for MPNC-7-50-1000, MPNC-7-90-1000, MPNC-7-130-1000, MPNC-7-170-1000. Furthermore, it is visible in the pore size distribution and the cumulative pore volume (Figure 10 b, c) that there is an increase of micropore and mesopore volume introduced in the samples with decreasing particle sizes. It is assumed that this effect cannot be attributed to an increase of pore volume within the particles rather to a denser particle packing in terms of interparticle porosity. As the particles get smaller they have a denser packing in the measurement cell and therefore new pores will form in between the particles, introducing additional pore volume and surface area that is not correlated with the intraparticular primary particle properties but the packing of the particles.

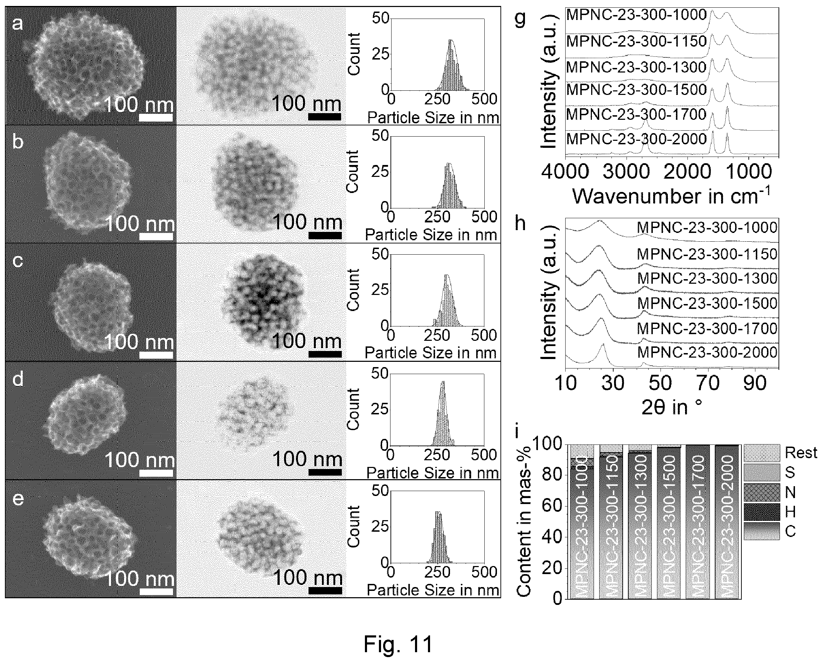

To investigate the temperature-induced changes on the surface composition and graphitization degree (e.g. N content, conductivity, as well as wettability), MPNCs were annealed at different temperatures (general principle shown in Figure 3). Figure 11 shows SEM and TEM images and particle diameters distributions of porous carbon nanoparticles carbonized at 1150 °C (MPNC-23-300-1000-1150) (a), 1300 °C (MPNC-23-300-1000-1300) (b), 1500 °C (MPNC-23-300-1000-1500) (c), 1700 °C (MPNC-23-300-1000-1700) (d) and 2000 °C (MPNC-23-300-1000-2000) (e). Raman spectra (f), X-ray diffraction patterns (g) and elemental analysis (h) for porous carbon nanoparticles after the post-treatment at higher temperatures.

The HRTEM imaging was used to monitor the morphological changes induced by annealing (not shown).

The HRTEM observations are in agreement with Raman investigations. The Raman spectra (Figure 11 g) of all MPNC samples, independently on the pore and particles size, carbonized at temperatures between 1000-1300 °C are very similar, demonstrating a very similar carbon microstructure. Specifically, broad peaks were observed in the first order and a broad band - within the second order of the Raman spectrum, indicating large contribution from amorphous carbon and the presence of defects. While the samples annealed at elevated temperature showed clear difference (Figure 11 g) MPNCs annealed at 1500, 1700 and 2000 °C showed narrowing of peaks in the first order of the Raman spectra (1000 - 1700 $cm^{-1}$).

At the same time, emerging of peaks with high intensity in the second order of the spectrum (2400 - 3000 $cm^{-1}$) are observed, confirming the higher graphitization observed also by HRTEM (not shown).

The crystallinity of the samples was further evaluated using X-ray diffraction (Figure 11 h). In line with Raman studies, all patterns of the samples annealed with the same temperature demonstrate the same tendency independently on the pore or particle diameter of the MPNCs. The XRD diffractograms show the presence of two broad reflections at 23.5° and 43.7° assigned to the (002) and (100) graphite reflections characteristic for disordered carbons. With increasing carbonization temperature, the aforementioned reflections become sharper, indicating an enhanced crystallinity. Furthermore, the XRD diffractograms before and after the last synthesis step - treating the MPNCs at 500 °C - show the importance of this step, as the sharp reflexes at 18 ° that is assigned to insoluble residuals from the etching step, is removed (not shown). The removal of residuals is also visible from the thermogravimetric analysis (TGA) data (not shown), where the mass loss at 500 °C, which is assigned to the residuals, vanished after the heat treatment at 500 °C.

Graphitization temperature affects not only the crystallinity and electrical conductivity of the MPNCs but also the composition and the heteroatom content which plays a vital role in the majority of applications. Thus, it is important to choose the carbonization temperature that would be a compromise between a good crystallinity and high heteroatom content. Carbonization of samples at 1000 °C is sufficient for transformation of PANI into carbon with moderate graphitization (ordering), but also a sufficient amount of nitrogen doping remained in the carbon matrix. To determine the chemical composition, combustion elemental analyses and EDX are used (not shown). As expected, independently on the pore size, all samples showed similar N content in the range from 4.0 to 6.5 wt.%. This is in good agreement for materials carbonized at 1000 °C. EDX mapping shows the homogeneous distribution of C, O and N elements along the particle.

Sample annealing at increasing temperatures led to larger C content and decrease in the surface functionalities (Figure 11 i). Compared to MPNC-23-300-1000, the samples annealed at higher temperatures showed an increase in C content from 84 wt% to 99 wt % and decreased N functionalities on the surface from 5.3 wt.% to 0.1 wt.%.

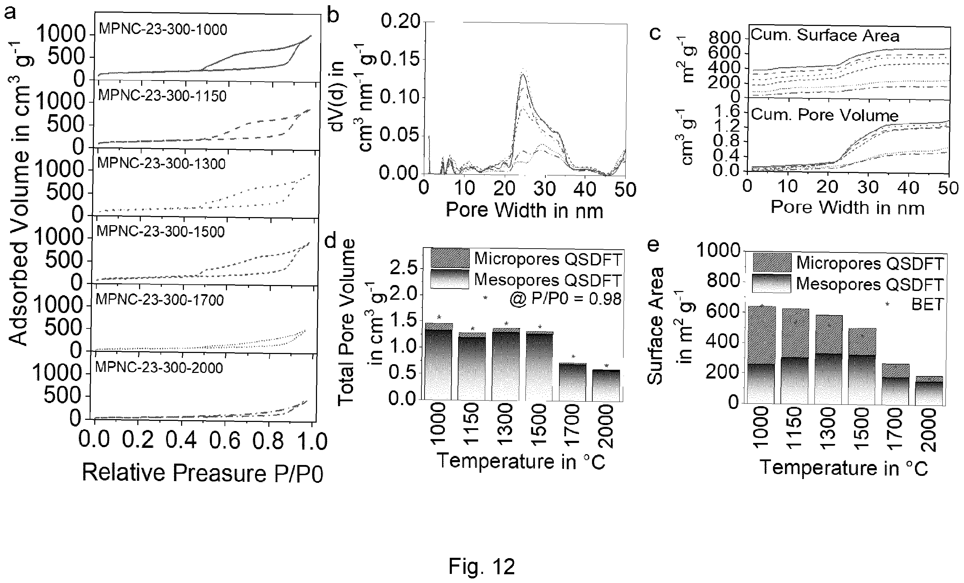

Figure 12 shows physisorption isotherms (a), pore size distribution determined by QSDFT (b), cumulative pore volume and surface area determined by QSDFT (c), the corresponding total pore volume determined at p/p0 = 0.98 and/or QSDFT (d) and specific surface area determined by BET and/or QSDFT (e) of porous carbon nanoparticles carbonized/annealed at different temperatures between 1000 °C-2000 °C.

As shown in Figure 12 elevated temperatures can influence the morphology and pore structure of the material. While the size and morphology of the MPNCs annealed at higher temperatures were preserved, as was proven by HRTEM analysis (not shown), the mesopore structure appeared to be affected. Compared to MPNC-23-300-1000 with the SSA of 641 $m^2$ $g^{-1}$ (702 $m^2$ $g^{-1}$ with QSDFT), the MPNCs SSA showed progressive decay: from 532 $m^2$/g for MPNC-23-300-1000-1150 to 515, 448, 250 and finally to 174 $m^2$ $g^{-1}$ for annealing temperatures of 1300, 1500, 1700, and 2000 °C (626, 585, 502, 269 and 191 $m^2$ $g^{-1}$ with QSDFT), respectively (Figure 12 e). Such a drastic decrease in SSA is associated with the micropore closure/fusing under elevated temperatures and overall pore volume decrease.

The following examples serve for a further explanation of the invention. However, the invention is not limited to the specific embodiments shown in the examples.

**EXEMPLARY EMBODIMENTS**

All ingredients of the listed here are - unless otherwise stated - commercially available and have been used in the commercial quality.

<u>**Materials/Chemicals:**</u>

Silica nanoparticles with a size of 7 nm (Ludox SM-30, 30 wt. % solution in $H_2O$), 12 nm (Ludox AS-30, 30 wt. % solution in $H_2O$), 23 nm (Ludox TMA, 34 wt. % solution in $H_2O$), hydrochloric acid (HCl (1M)), ammonium persulfate (APS, $\geq$98.0 %), ammonium hydrogen difluoride ($NH_4HF_2$, $\geq$95 %), tetraethyl orthosilicate (TEOS, $\geq$99 %) were purchased from Sigma-Aldrich. Silica with a size of 30 nm (Levasil CS40-213, 40 wt. % solution in $H_2O$) and 60 nm (Levasil CS50-18, 50 wt. % solution in $H_2O$) were purchased from Nouryon. Aniline (99.5 %) and concentrated $HNO_3$ (69 %) were purchased from VWR. Ammonium hydroxide solution ($NH_4OH$, 35 %) was purchased from Acros. 2-propanol, acetone, and ethanol were of analytical grade and were purchased from Sigma-Aldrich.

**Example 1: Monodisperse, spherical polyaniline-silica composite nanoparticles (PANI/SiO$_2$)**

800 ml MilliQ $H_2O$ was transferred into a 1000 ml round-bottom flask and cooled down by an ice bath. 100 ml 1M HCl, 8 ml aniline and 23 ml Ludox TMA (23 nm, 34 wt. %, 1.23 g/ml) were added subsequently and the mixture was stirred until a homogeneous solution was formed. In the meantime, 20.05 g of ammonium persulfate (APS) was dissolved in 40 ml 1M HCl. To induce the polymerization of aniline, the APS solution was added to the round-bottom flask dropwise over 15 min (2 ml min$^{-1}$) by using a dropping funnel (molar ratio APS:aniline 1:1). The mixture was then stirred for 24 h while keeping the reaction flask cooled in the ice bath.

Example 2: Monodisperse, porous carbon nanoparticles from monodisperse, polyaniline-silica composite nanoparticles

The formed PANI/SiO$_2$ composite polymer particles from Example 1 were collected by centrifugation (9000 rpm, 10 min) and redispersed in fresh water. This washing step was repeated at least 10 times until the pH of the solution was neutral. The obtained nanocomposite material was subjected to freeze-drying to prevent morphology change. The freeze-dried powder was transferred in a calcination boat and heated to 1000 °C under a nitrogen atmosphere with a heating ramp of 200 K/h and a holding time of 6 h. To remove the silica template from the carbonized sample, the composite material was etched with 4M $NH_4HF_2$ solution (50 ml g$^{-1}$ of sample) for 48 h resulting in a mesoporous N-doped carbon (MPNC). The MPNC was separated from the etching solution by filtration. The wet filtrate was redispersed in fresh $H_2O$ and stirred for 12 h to wash out $NH_4HF_2$ residuals. This washing step was repeated 4 times followed by washing with ethanol. The wet filtrate was dried under vacuum for 24 h. The resulting dry powder was annealed at 500 °C under a nitrogen atmosphere with a heating ramp of 300 K h$^{-1}$ for 2 h to remove insoluble residuals from the etching step. The final MPNC powder had a yield of 3.54 g (44 %) and was denoted as MPNC-23-300-1000 according to the size of the SiO$_2$ template, the particle size of the MPNC and the pyrolysis temperature.

**Example 3: Upscale synthesis**

Upscales were realized in a 4 L round-bottom flask by using three times the amount of all chemicals and $H_2O$. As a magnetic stirrer was not strong enough for the increased volume anymore, a KPG stirrer with a stirring blade that was inserted in the flask from the top to stir the reaction solution, was used. The upscale syntheses yielded around 10 g.

**Example 4: Pore size engineering**

Pore size engineering was achieved by using different sizes of SiO$_2$ nanoparticle templates instead of Ludox TMA (used for PANI/SiO$_2$-23). The samples PANI/SiO$_2$-7, PANI/SiO$_2$-12, PANI/SiO$_2$-30, PANI/SiO$_2$-60 and PANI/SiO$_2$-100 were synthesized by using Ludox SM SiO$_2$ (7 nm, 30 wt. %, 1.23 g/mL, 26.3 ml), Ludox AS-30 (12 nm, 30 wt. %, 1.21 g/ml, 26.3 ml), Levasil CS40-213 (30 nm, 40 wt. %, 1.30 g/ml, 18.5 ml), Levasil CS50-18 (60 nm, 50 wt. %, 1.40 g/ml, 13.8 ml) and SiO$_2$ nanospheres that were synthesized using the *stöber process* by hydrolysis and polymerization of tetraethoxysilane (100 nm, 10 wt. %, 1.20 g/ml, 80.0 ml), respectively. The obtained nanocomposite material PANI/SiO$_2$ was subjected to freeze-drying to prevent morphology change. The freeze-dried powder was transferred in a calcination boat and heated to 1000 °C under a nitrogen atmosphere with a heating ramp of 200 K/h and a holding time of 6 h. To remove the silica template from the carbonized sample, the composite material was etched with 4M $NH_4HF_2$ solution

(50 ml g$^{-1}$ of sample) for 48 h resulting in a mesoporous N-doped carbon (MPNC). The MPNC was separated from the etching solution by filtration. The wet filtrate was redispersed in fresh $H_2O$ and stirred for 12 h to wash out $NH_4HF_2$ residuals. This washing step was repeated 4 times followed by washing with ethanol. The wet filtrate was dried under vacuum for 24 h. The resulting dry powder was annealed at 500 °C under a nitrogen atmosphere with a heating ramp of 300 K h$^{-1}$ for 2 h to remove insoluble residuals from the etching step.

**Example 5: Particle Size Engineering of composite polymer particles (PANI/SiO2) and porous carbon particles (MPNC)**

PANI/SiO$_2$ and MPNC particle size engineering was achieved by using different APS to aniline ratios. For PANI/SiO$_2$-7-50 (PANI/SiO$_2$-Template Size-Particle Diameter of composite polymer particle) a ratio of 0.1, for PANI/SiO$_2$-7-90 a ratio of 0.25 and for PANI/SiO$_2$-7-170 a ratio of 2.00 was used. This corresponds to the use of 90 % less, 75 % less and 100 % more initiator while the amounts of other reagents were kept constant. The obtained nanocomposite material PANI/SiO$_2$ was subjected to freeze-drying to prevent morphology change. The freeze-dried powder was transferred in a calcination boat and heated to 1000 °C under a nitrogen atmosphere with a heating ramp of 200 K/h and a holding time of 6 h. To remove the silica template from the carbonized sample, the composite material was etched with 4M $NH_4HF_2$ solution (50 mlg$^{-1}$ of sample) for 48 h resulting in an N-doped carbon (MPNC). The MPNC was separated from the etching solution by filtration. The wet filtrate was redispersed in fresh $H_2O$ and stirred for 12 h to wash out $NH_4HF_2$ residuals. This washing step was repeated 4 times followed by washing with ethanol. The wet filtrate was dried under vacuum for 24 h. The resulting dry powder was annealed at 500 °C under a nitrogen atmosphere with a heating ramp of 300 K h$^{-1}$ for 2 h to remove insoluble residuals from the etching step.

**Example 6: High temperature post-Treatment**

High temperature post treatment of MPNC-23-300-1000 was achieved by using a high temperature oven with graphite heating elements from Thermal Technology GmbH at a given temperature. The sample was introduced into the oven and the chamber was evacuated for 20 minutes and refilled with argon three times. The sample was then heated up to the final temperature with a heating ramp of 300 K/h and the final temperature was hold for 2 h before the sample was cooled down again with a cooling ramp of 300 K/h. The obtained samples are named MPNC-TS-PS-CT1-CT2 with TS = template size, PS = particle size, CT1 = calcination/pyrolysis temperature, and CT2 = post-treatment temperature (MPNC-pore size-particle size-calcination temperature-post-treatment temperature) with CT2 = 1150 - 2000 °C.

**Example 7: Post-functionalization**

Post-functionalization of high temperature treated MPNC-7-130-1000-1300 was realized by surface oxidation with concentrated $HNO_3$ (69 %) and subsequent temperature annealing under ammonia atmosphere. Thereby, 800 mg of MPNC-7-130-1000-1300 were added to 40 ml of preheated $HNO_3$ (70 °C). The reaction mixture was kept at 70 °C and stirred vigorously for 2 h. After reaction completion the reaction mixture was immediately cooled in an ice bath and filtered. Then, the material was washed with boiling water until the supernatant was neutral. The oxidized sample (MPNC-7-130-1000-1300-Ox) was dried at 80 °C under vacuum. For the ammonolysis, the oxidized sample was placed in a fluidized-bed oven and treated under $NH_3$ atmosphere (10 l h$^{-1}$) at a temperature T (T = 400, 500, 600 °C) for 2 h with a heating ramp of 5 °C min$^{-1}$ resulting in samples with the nomenclature of MPNC-7-130-1000-1300-Ox-N-T.

Table 1: **Elemental analysis of post-functionalization of MPNC-7-130-1000-1300.**

|  | C (wt%) | H (wt%) | N (wt%) | S (wt%) | Residual (wt%) |
|---|---|---|---|---|---|
| MPNC-7-130-1000-1300 | 96.06 | 0.66 | 0.95 | 0.47 | 1.86 |
| MPNC-7-130-1000-1300-Ox | 85.38 | 1.18 | 1.07 | 0.36 | 12.0 |
| MPNC-7-130-1000-1300-Ox-N-400 | 89.70 | 0.91 | 2.74 | 0.30 | 6.35 |
| MPNC-7-130-1000-1300-Ox-N-500 | 89.68 | 0.91 | 3.54 | 0.26 | 5.61 |
| M P N C-7-130-1000-1300-Ox-N-600 | 88.63 | 0.98 | 2.69 | 0.34 | 7.36 |

## Characterization

For Elemental Analysis a *vario MICRO cube* (Elementar Analysensysteme GmbH) with a temperature programmable column and a thermal conductivity detector was used. Roughly one milligram of sample was mixed with $WO_3$ as an oxidation catalyst and combusted at 1150 °C.

Thermogravimetric Analysis was performed on a *STA 409 C* (Netzsch) with roughly one milligram of sample and a heating rate of 10 K/min in air and under nitrogen atmosphere respectively.

Scanning Electron Microscopy (SEM) measurements were carried out using a Field Emission Gun High Resolution SEM (*FEG-HRSEM) SU8220* (Hitachi) equipped with a SE (secondary electron), BSE (back- scattered electron) and TE (transmission electron) detector. Diluted samples were drop-casted onto carbon coated copper grids (200 mesh). For general imaging of the electrodes, the scanning mode with an acceleration voltage of 2.5 kV and a working distance of 3.0 mm was applied. For imaging of porous samples, we used a transmission mode, operated at an acceleration voltage of 30 kV and a working distance of 8.0 mm.

Energy-dispersive X-ray (EDX) analysis and element mapping was performed on the same machine using an XFlash and FlatQUAD detector from Bruker, respectively.

For High-Resolution Transmission Electron Microscopy (HRTEM) imaging, a *Talos 200X* electron microscope (Thermo Fisher) operated at an acceleration voltage of 200 kV was used.

X-ray diffraction was measured on a *Bruker D8 Discover* using a flat sample holder with an embedded silicon monocrystal. The sample was rotated with 45 rounds per minute and the diffractogram was recorded between 10 and 105 ° with a step size of 0.025 degrees and a measurement time of 0.5 seconds per step.

Raman spectra were recorded using a *Senterra II microscope* (Bruker) equipped with a 532 nm laser. The laser power was set to 0.25 mW. Measurements were done with a wavenumber resolution of 4 $cm^{-1}$. Spectra were recorded in the range of 750-2500 $cm^{-1}$.

The specific surface area and pore structure was determined by $N_2$ physisorption at 77 K using an *Autosorb 1-C* physisorption station (Quantachrome). The measurements were done from the powder samples degassed in vacuum at 100 °C for 24 h. Specific surface area was calculated using the Brunauer-Emmer-Teller (BET) method fitting the p/p0 range from 0.05 to 0.30 and/or using the quenched solid density functional theory (QSDFT). Specific pore volume was calculated by using the adsorbed volume at a relative pressure of P/P0=0.98 and/or QSDFT. Pore size distribution was determined according toQSDFT, taking into account spherical pores. The micropore specific surface area and pore volume was estimated using the t-plot method.

The results of characterization are discussed in the description of the Figures, particularly Figures 4 to 12.

## Claims

1. Composite polymer particles comprising a polymer matrix and inorganic nanoparticles homogenously distributed within the polymer matrix, wherein the composite polymer particles are obtained by polymerization of a polymerizable carbon source in the presence of dispersed inorganic nanoparticles and an initiator,
**characterized in that** the composite polymer particles have a predefined particle-diameter dispersity Đ and predefined particle diameters, wherein the predefined particle-diameter dispersity Đ and the predefined particle diameters are independently controlled from the particle diameter of the inorganic nanoparticles by adjusting the molar ratio of initiator to polymerizable carbon source during polymerization reaction.

2. Composite polymer particles of claim 1, wherein the composite polymer particles are nanoparticles, preferably with particle diameters from 10 nm to 1000 nm, preferably from 50 nm to 500 nm.

3. Composite polymer particles of claim 1 or 2, wherein the particle-diameter dispersity Đ of the composite polymer particles is monodisperse, preferably with Đ < 1.2.

4. Composite polymer particles of any one of the preceding claims, wherein the molar ratio of the initiator to the polymerizable carbon source is not equimolar.

5. Composite polymer particles of any one of the preceding claims, wherein the molar ratio of the initiator to the polymerizable carbon source ranges from 0.01 to 10, preferably between 0.1 and 2.

6. Composite polymer particles of any one of the preceding claims, wherein increasing the molar ratio of the initiator relative to the polymerizable carbon source leads to an increase of particle diameter of the composite polymer particles and vice versa.

7. Composite polymer particles of any one of the preceding claims, wherein the initiator is added subsequently during polymerization reaction and the addition rate ranges preferably from 0.1 ml min$^{-1}$ l$^{-1}$ to 200 ml min$^{-1}$ l$^{-1}$, preferably from 1 ml min$^{-1}$ l$^{-1}$ to 3 ml min$^{-1}$ l$^{-1}$.

8. Composite polymer particles of any one of the preceding claims, wherein the initiator can be amongst others ammonium persulfate (($NH_4$)$_2$$S_2O_8$), sodium persulfate ($Na_2S_2O_8$), potassium persulfate ($K_2S_2O_8$) or oxygen.

9. Composite polymer particles of any one of the preceding claims, wherein the molar concentration of the polymerizable carbon source during polymerization reaction ranges from 0.05 mol l$^{-1}$ to 1 mol l$^{-1}$, preferably from 0.09 mol l$^{-1}$ to 0.24 mol l$^{-1}$.

10. Composite polymer particles of any one of the preceding claims, wherein the polymerizable carbon source is a polymerizable carbon source being able to undergo oxidative polymerization.

11. Composite polymer particles of any one of the preceding claims, wherein the inorganic nanoparticles have particle diameters ranging from 1 nm to 800 nm, preferably from 5 to 100 nm.

12. Composite polymer particles of any one of the preceding claims, wherein the inorganic nanoparticles have a pre-defined particle-diameter dispersity Đ, wherein Đ is preferably < 1,2.

13. Composite polymer particles of any one of the preceding claims, wherein the inorganic nanoparticle can be amongst others $SiO_2$, metal oxides or inorganic salts, preferably $SiO_2$.

14. Method for independently controlling the particle diameter and particle-diameter dispersity Đ of composite polymer particles, wherein the composite polymer particles comprise a polymer matrix and inorganic nanoparticles homogenously distributed within the polymer matrix, wherein the composite polymer particles are obtained by polymerization of a polymerizable carbon source in the presence of dispersed inorganic nanoparticles and an initiator, **characterized in that** the particle-diameter dispersity Đ and the particle diameter of the composite polymer particles are independently controlled from the particle diameter of the inorganic nanoparticles by adjusting the molar ratio of initiator to polymerizable carbon source during polymerization reaction.

15. Porous carbon particles obtained from composite polymer particles according to any one of claims 1 to 14.

16. Porous carbon particles according to claim 15, wherein the composite polymer particles according to claims 1 to 13 have been treated in a consecutive manner with the following steps:

    a. collecting, washing and drying the composite polymer particles of any one of claim 1 to 13,
    b. calcination of the composite nanoparticles under an inert atmosphere or reactive atmosphere below 1100 °C to obtain a carbonized reaction product,
    c. etching the carbonized reaction product to obtain an etched carbonized reaction product,
    d. separating and washing the etched carbonized reaction product,
    e. drying the etched carbonized reaction product, and
    f. temperature annealing of the etched carbonized reaction product under an inert or reactive atmosphere up to 3000 °C.

17. Porous carbon particles of any one of claim 15 or 16 comprising a specific surface area ranging from 25 m$^2$ g$^{-1}$ to 2000 m$^2$ g$^{-1}$, preferably 200 m$^2$ g$^{-1}$ to 1500 m$^2$g$^{-1}$ determined by the BET method of nitrogen physisorption analysis.

18. Porous carbon particles of any one of claim 15 to 17 comprising pore volumes ranging from 0.1 cm$^3$ g$^{-1}$ to 5.0 cm$^3$ g$^{-1}$, preferably from 0.25 cm$^3$ g$^{-1}$ to 3.0 cm$^3$ g$^{-1}$ determined by $N_2$ physisorption at a relative pressure of P/P0 = 0.98.

19. Method for independently controlling the pore size and particle diameter of porous carbon particles, comprising the following steps of

    a. Synthesis of composite polymer particles of predefined particle-diameter dispersity Đ and predefined particle diameters by polymerization of polymerizable carbon source in the presence of dispersed inorganic nanoparticles and an initiator, wherein the particle-diameter dispersity Đ and the composite polymer particle diameters are controlled by the molar ratio of initiator to polymerizable carbon source during polymerization reaction,

b. collection, washing and drying of the composite polymer particles,

c. calcination of the composite polymer particles under inert atmosphere or reactive atmosphere below 1100 °C to obtain a carbonized reaction product,

d. etching the carbonized reaction product to obtain an etched carbonized reaction product,

e. separating and washing the etched carbonized reaction product,

f. drying the etched carbonized reaction product,

g. temperature annealing of the etched carbonized reaction product under an inert or reactive atmosphere in a temperature range from 300°C up to 3000 °C.

20. Method according to claim 19, wherein step is followed by functionalization of the annealed, etched, carbonized reaction product by wet chemical processes at any temperature and/or under an inert or reactive gas atmosphere at any temperature, preferably under thermal treatment.

21. Article of manufacture comprising composite polymer particles of anyone of claim 1 to 13 or composite polymer particles manufactured according to the method of claim 14 or porous carbon particles of anyone of claim 15 to 18 or porous carbon particles manufactured according to the method of claim 19.

Fig. 1

EP 4 421 110 A1

Fig. 2

50

60

1150°C – 2000 °C

1150 °C     1500 °C     2000 °C

Fig. 3

Fig. 4

Fig. 5

Fig. 6

Fig. 7

Fig. 8

Fig. 9

Fig. 10

EP 4 421 110 A1

Fig. 11

Fig. 12

Europäisches
Patentamt

European
Patent Office

Office européen
des brevets

# EUROPEAN SEARCH REPORT

**Application Number**

EP 23 15 8057

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GANG WANG ET AL: "Controlled Synthesis of N-Doped Carbon Nanospheres with Tailored Mesopores through Self-Assembly of Colloidal Silica", ANGEWANDTE CHEMIE INTERNATIONAL EDITION, VERLAG CHEMIE, HOBOKEN, USA, vol. 54, no. 50, 22 October 2015 (2015-10-22), pages 15191-15196, XP072083601, ISSN: 1433-7851, DOI: 10.1002/ANIE.201507735 | 1-18,21 | INV. C08G73/02 C01B32/15 C08K3/36 B01J20/20 B82Y30/00 H01M4/96 |
| Y | * the whole document * | 19,20 | |
| Y | YUANZHEN CHEN ET AL: "Preparation of activated rectangular polyaniline-based carbon tubes and their application in hydrogen adsorption", INTERNATIONAL JOURNAL OF HYDROGEN ENERGY, ELSEVIER, AMSTERDAM, NL, vol. 36, no. 18, 21 January 2011 (2011-01-21), pages 11738-11745, XP028271007, ISSN: 0360-3199, DOI: 10.1016/J.IJHYDENE.2011.01.119 [retrieved on 2011-01-27] * abstract * * page 11741, column 2, paragraph 1 * * page 11744, column 1, paragraph 2 * | 19,20 | TECHNICAL FIELDS SEARCHED (IPC) C08G C01B C08K H01M G01N B82Y B01J |
| Y | CN 102 876 437 A (XIAOGAN JIANGYAN CHEMICAL CO LTD) 16 January 2013 (2013-01-16) * paragraph [0053] * | 19,20 | |

The present search report has been drawn up for all claims

| Place of search | Date of completion of the search | Examiner |
|---|---|---|
| Munich | 3 August 2023 | Mader, Margarita |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 15 8057**

This annex lists the patent family members relating to the patent documents cited in the above-mentioned European search report.
The members are as contained in the European Patent Office EDP file on
The European Patent Office is in no way liable for these particulars which are merely given for the purpose of information.

**03-08-2023**

| Patent document cited in search report | | Publication date | Patent family member(s) | Publication date |
|---|---|---|---|---|
| CN 102876437 | A | 16-01-2013 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GILL et al.** *Langmuir,* 1992, vol. 8, 2178-2182
- **FENG et al.** *Journal of Applied Polymer Science,* 2006, vol. 101, 2088-2094
- **ROOSZ et al.** *Journal of Colloid and Interface Science,* 2017, vol. 502, 184-192
- **FISCHER et al.** *Carbon,* 2019, vol. 146, 44
- Particle-diameter dispersity Đ. *Pure Appl. Chem.,* 2011, vol. 83 (12), 2251-2259
- Pore size" (pore width). *Pure & Appl. Chem.,* 1994, vol. 66 (8), 1739-1758